# EUROPEAN PATENT SPECIFICATION

(11) **EP 0 867 473 B1**
(45) Date of publication and mention of the grant of the patent: **12.08.2009**
(21) Application number: 98302388.8
(22) Date of filing: 27.03.1998
(51) Int. Cl.: C08L 23/04, C08J 5/18

(54) **High strength polyethylene film**
Hochfeste Polyethylenfolie
Film d'éthylène à haute résistance

(30) Priority: 28.03.1997 US 828408
(43) Date of publication of application: 30.09.1998
(73) Proprietor: Union Carbide Chemicals & Plastics Technology LLC, Danbury, CT 06817-0001 (US)
(72) Inventor: Kupperblat, Sandra A., Flanders, New Jersey 07836 (US); Tilston, Michael W., St. Albans, West Virginia 25177 (US); Ealer, George E., Whitehouse Station, New Jersey 08889 (US)
(74) Representative: Hayes, Adrian Chetwynd

(56) References cited:
- WO-A-94/25523
- US-A- 5 382 631
- US-A- 5 514 455

## Description

### Technical Field

This invention relates to film extruded from a blend of polyethylene copolymers.

### Background Information

There has been a rapid growth in the market for linear low density polyethylene (LLDPE), particularly resin made under mild operating conditions, typically at pressures of 0.7 to 2.1 MPa (100 to 300 pounds per square inch (psi))and reaction temperatures of less than 100 degrees C. This low pressure process provides a broad range of LLDPE products for blown and cast film, injection molding, rotational molding, blow molding, pipe, tubing, and wire and cable applications. LLDPE has essentially linear backbone with only short chain branches, 2 to 6 carbon atoms in length. In LLDPE, the length and frequency of branching, and, consequently, the density, is controlled by the type and amount of comonomer used in the polymerization.

LLDPE resins designed for commodity type applications typically incorporate 1-butene as the comonomer. The use of a higher molecular weight alpha-olefin comonomer produces resins with significant strength advantages relative to those of ethylene/1-butene copolymers. The predominant higher alpha-olefin comonomers in commercial use are 1-hexene, 4-methyl-1-pentene, and 1-octene. The bulk of the LLDPE is used in film products where the excellent physical properties and drawdown characteristics of LLDPE film makes this film well suited for a broad spectrum of applications. Fabrication of LLDPE film is generally effected by the blown film and slot casting processes. The resulting film is characterized by excellent tensile strength, high ultimate elongation, good impact strength, and excellent puncture resistance.

These properties together with toughness are enhanced when the polyethylene is of high molecular weight. However, as the molecular weight of the polyethylene increases, the processability of the resin usually decreases. By providing a blend of polymers, the properties characteristic of high molecular weight resins can be retained and processability, particularly the extrudability (from the lower molecular weight component) can be improved.

Blends of polymers can be made using several methods such as by dry mixing or melt mixing polymers. Another way of preparing a blend of different polymers is by using a staged reactor process such as those described in United States patents 5,047,468 and 5,126,398. Briefly, the process is one for the in situ blending of polymers wherein one ethylene copolymer is prepared in a high melt index reactor and another ethylene copolymer is prepared in a low melt index reactor. The process typically comprises continuously contacting, under polymerization conditions, a mixture of ethylene and one or more alpha-olefins with a magnesium/titanium catalyst system in two reactors connected in series.

While the in situ blends prepared as above and the films produced therefrom are found to have the advantageous characteristics heretofore mentioned, industry continues to seek films with characteristics tailored to particular applications. One such application is consumer and institutional garbage bags, which require a film having high Elmendorf Tear Strength. Such a film is the subject matter of United States Patent 5,514,455. The drive for thinner bags suggests that this same market would be better served by even higher Elmendorf Tear Strengths, particularly in the machine direction (MD).

### Disclosure of the Invention

An object of this invention, therefore, is to provide a blend, which can be extruded into a film having a higher Elmendorf Tear Strengths in the machine direction than previously obtained. Other objects and advantages will become apparent hereinafter. According to the present invention such a blend has been discovered.

In a first aspect, the present invention provides a blend comprising a mixture of a first ethylene/alpha-olefin copolymer and a second ethylene/alpha-olefin copolymer said blend having a flow index in the range of 5 to 50 grams per 10 minutes ; a melt flow ratio in the range of 10 to 50; a density in the range of 0.900 to 0.940 gram per cubic centimetre; a weight average molecular weight in the range of 98,000 to 190,000; and an Mw/Mn ratio of at least 2; wherein:
each copolymer is a copolymer of ethylene and an alpha-olefin having 3 to 8 carbon atoms;
the first copolymer has a flow index in the range of 5 to 75 grams per 10 minutes; a melt flow ratio in the range of 10 to 50; a density in the range of 0.860 to 0.930 gram per cubic centimetre; a weight average molecular weight up to 190,000; and an Mw/Mn ratio in the range of 2 to 4;
the second copolymer has a flow index in the range of 5 to 75 grams per 10 minutes; a melt flow ratio in the range of 10 to 50; a density in the range of 0.935 to 0.970 grams per cubic centimetre; a weight average molecular weight up to 190,000; and an Mw/Mn ratio in the range of 2 to 4;
   the weight ratio of the first copolymer to the second copolymer is in the range of 70:30 to 30:70;
   the weight average molecular weight of the second copolymer is from 90 to 110% of the molecular weight of the first copolymer.

In a second aspect, the present invention provides a film extruded from the blend above having an Elmendorf Tear Strength in the machine direction of at least 19685 grams per mm (500 grams per mil).

In a third aspect, the present invention provides a process for preparing the blend above, which comprises mixing the first and second copolymers.

It will be readily apparent when comparing this blend with, for example, United States Patent 5,514,455 that the blend of the present invention contains two high molecular weight copolymers as opposed to the high and low molecular weight copolymers of the prior art; that the densities of each copolymer in the blend are distinctly different; and that the melt flow ratio of the blend is lower.

### Description of the Preferred Embodiment(s)

Elmendorf Tear Strength is a measure of the film's resistance to tearing propagation of a precut slit, and, if sufficiently high, assures that the film will be capable of being utilized, for example, in the downgauged consumer and institutional trash bags as mentioned above. Elmendorf Tear Strength is determined under ASTM D-1992-89. It is measured in grams per mil (grams per mm) both in the machine direction (MD) and in the transverse direction (TD). In this invention, the Elmendorf Tear Strength in the machine direction is, generally, at least 17717 grams per mm (450 grams per mil), and is often in the range of 23622 to 39370 grams per mm (600 to 1000 grams per mil). The Elmendorf Tear Strength in the transverse direction can be at least 25590 grams per mm (650 grams per mil), and is preferably in the range of 27559 to 47244 grams per mm (700 to 1200 grams per mil). The MD is important when sealing in the machine direction, the most common direction for sealing. Thus, an increase in MD and the balance between MD and TD become important. The closer together the MD and TD are the better.

The film is formed by extrusion. The extruder is a conventional one using a die, which will provide the desired gauge. The gauge of the films of interest here can be in the range of 0.008 to 0.06 mm (0.3 to 2.5 mils). And is preferably in the range of 0.02 to 0.05 mm (0.75 to 2.0 mils). Examples of various extruders, which can be used in forming the film, are the single screw type modified with a blown film die and air ring and continuous take off equipment. A typical single screw type extruder can be described as one having a hopper at its upstream end and a die at its downstream end. The happer feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of 16:1 to 30:1. The extrusion can take place at temperatures in the range of 160 to 270 degrees C, and is preferably carried out at temperatures in the range of 180 to 240 degrees C.

The blend is produced by mixing two polymers wherein the weight average molecular weight of the second copolymer is from 90 to 110% of the molecule weight of the first copolymer. The flow index of the first copolymer is in the range of 5 to 75 grams per 10 minutes, and is preferably in the range of 5 to 25 grams per 10 minutes. The flow index of the second copolymer is in the range of 5 to 75 grams per 10 minutes, and is preferably in the range of 5 to 25 gams per 10 minutes.

The copolymers are copolymers of ethylene and one alpha-olefin comonomer having 3 to 8 carbon atoms, and can be, for example, propylene, 1-butene, 1-hexene, 4-methyl-1-pentene, and 1-octene. The preferred comonomers are 1-butene and 1-hexene.

The linear polyethylene blend components can be produced using various transition metal catalyst. The polyethylene blend of subject invention is preferably produced in the liquid phase in solutions or slurries by conventional techniques, again at low pressures. Low pressure processes are typically run at pressures below 7 MPa (1000 psi) whereas high pressure processes are typically run at pressures above 105 MPa (15,000 psi). Typical transition metal catalyst systems, which can be used to prepare the blend, are magnesium/titanium based catalyst systems, which can be exemplified by the catalyst system described in United States patent 4,302,565; vanadium based catalyst systems such as those described in United States patents 4,508,842; 5,332,793; 5,342,907; and 5,410,003; a chromium based catalyst system such as that described in United States patent 4,101,445; and a metallocene catalyst system such as those described in United States patents 4,937,299; 5,317,036; and 5,327,752. Many of these catalyst systems are often referred to as Ziegler-Natta catalyst systems. Catalyst systems, which use chromium or molybdenum oxides on silica-alumina supports, are also useful. Preferred catalyst systems for preparing the components for the blends of this invention are magnesium/titanium catalyst systems and metallocene catalyst systems.

The magnesium/titanium based system which can be used is the catalyst system described in United States patent 4,302,565 although the precursor is preferably unsupported and another catalyst system in which the precursor is formed by spray drying and is used in slurry form. Such a catalyst precursor, for example, contains titanium, magnesium, an electron donor, and, optionally, an aluminium halide. The precursor is then introduced into a hydrocarbon medium such as mineral oil to provide the slurry form. The catalyst system is described in United States patent 5,290,745.

The electron donor, if used in the catalyst precursor, is an organic Lewis base, liquid at temperatures in the range of 0 degrees C to 200 degrees C, in which the magnesium and titanium compounds are soluble. The electron donor can be an alkyl ester of an aliphatic or aromatic carboxylic acid, an aliphatic ketone, an aliphatic amine, an aliphatic alcohol, an alkly or cycloalkyl ether, or mixtures thereof, each electron donor having 2 to 20 carbon atoms. Among these electron donors, the preferred are alkyl and cycloalkyl ethers having 2 to 20 carbon atoms; dialkyl, diaryl, and alkylaryl ketones having 3 to 20 carbon atoms; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propianate.

While an excess of electron donor is used initially to provide the reaction product of titanium compound and electron donor, the reaction product finally contains 1 to 20 moles of electron donor per mole of titanium compound and preferably 1 to 10 moles of electron donor per mole of titanium compound.

An activator compound, which is generally used with any of the titanium based catalyst precursors, can have the formula AIRₐX_{b}H_{c} wherein each X is independently chlorine, bromine, iodine or OR'; each R and R' is independently a saturated aliphatic hydrocarbon radical having 1 to 14 carbon atoms; b is 0 to 1.5; c is 0 or 1; and a+b+c=3.

Preferred activators include alkylaluminum mono- and dichlorides wherein each alkyl radical has 1 to 6 carbon atoms and the trialkylaluminums. Examples are diethylaluminum chloride and tri-n-hexylaluminum. 0.10 to 10 moles, and preferably 0.15 to 2.5 moles, of activator are used per mole of electron donor. The molar ratio of activator to titanium is in the range of 1:1 to 10:1, and is preferably in the range of 2:1 to 5:1.

The hydrocarbyl aluminum cocatalyst can be represented by the formula R₃Al or R₂AlX wherein each R is independently alkyl, cycloalkyl, aryl, or hydrogen; at least one R is hydrocarbyl; and two or three R radicals can be joined to form a heterocyclic structure. Each R, which is a hydrocarbyl radical, can have 1 to 20 carbon atoms, and preferably has 1 to 10 carbon atoms. X is a halogen, preferably chlorine, bromine, or iodine. Examples of hydrocarbyl aluminum compounds are as follows: triisobutylaluminum, tri-n-hexylaluminum, di-isobutyl-aluminum hydride, dihexylaluminum hydride, di-isobutyl-hexylaluminum, isobutyl dihexylaluminum, trimethylaluminum, triethylaluminum, tripropylaluminum, triisopropylaluminum, tri-n-butylaluminum,trioctylaluminum, tridecylalumuinum, tridodecylaluminum, tribenzylaluminum, triphenylaluminum, trinapthylaluminum, tritolylaluminum, dibutylaluminum chloride, diethylaluminum chloride, and ethylaluminum sesquichloride. The cocatalyst compounds can also serve as activators and modifiers.

As noted above, it is preferred not to use a support. However, in those cases where it is desired to support the precursor, silica is the preferred support. Other suitable supports are inorganic oxides such as aluminium phosphate, alumina, silica/alumina mixtures, silica modified with an organoaluminum compound such as triethylaluminum and silica modified with diethyl zinc. A typical support is a solid, particulate, porous material essentially inert to the polymerization. It is used as a dry powder having an average particle size of 10 to 250 microns and preferable 30 to 100 microns; a surface area of at least about 200 square meters per gram and preferably at least about 250 square meters per gram; and a pore size of at least 10 nm (100 angstroms) and preferably at least 20 nm (200 angstroms). Generally, the amount of support used is that which will provide 0.1 to 1.0 millimole of titanium per gram of support. Impregnation of the above mentioned catalyst precursor into a silica support can be accomplished by mixing the precursor and silica gel in the electron donor solvent or other solvent followed by solvent removal under reduced pressure. When a support is not desired, the catalyst precursor can be used in liquid form.

Activators can be added to the precursor either before and/or during polymerization. In one procedure, the precursor is fully activated before polymerisation. In another procedure, the precursor is partially activated before polymerization, and activation is completed in the reactor. Where a modifier is used instead of an activator, the modifiers are usually dissolved in an organic solvent such as isopentane and, where a support is used, impregnated into the support following impregnation of the titanium compound or complex, after which the supported catalyst precursor is dried. Otherwise, the modifier solution is added by itself directly to the reactor. Modifiers are similar in chemical structure and function to the activators as are cocatalysts. For variations, see, for example, United States patent 5,106,926. The cocatalyst is preferably added separately neat or as a solution in an inert solvent, such as isopentane, to the polymerization reactor at the same time as the flow of ethylene is initiated.

United States patent 5,106,926 provides another example of a magnesium/titanium based catalyst system comprising:
(a) a catalyst precursor having the formula Mg_{d}Ti(OR) ₑX_{f}(ED)_{g} wherein R is an aliphatic or aromatic hydrocarbon radical having 1 to 14 carbon atoms or COR' where R' is an aliphatic or aromatic hydrocarbon radical having 1 to 14 carbon atoms; each OR group is the same or different; X is independently chlorine, bromine or iodine; ED is an electron donor; d is 0.5 to 56; e is 0, 1, or 2; f is 2 to 116; and g is 1.5d+2;
(b) at least one modifier having the formula BX₃ or AlR₍₃₋ₑ₎Xₑ wherein each R is alkyl or aryl and is the same or different, and X and e are as defined above for component (a)
   wherein components (a) and (b) are impregnated into an inorganic support; and
(c) a hydrocarbyl aluminum cocatalyst.

The precursor is prepared from titanium compound, a magnesium compound, and an electron donor. Titanium compounds, which are useful in preparing these precursors, have the formula Ti(OR)ₑXₕ wherein R, X and e are as defined above for component (a); h is an integer from 1 to 4 and e+h is 3 or 4. Examples of titanium compounds are TICl₃, TICl₄, Ti (OC₂H₅)₂Br₃, Ti (OC₆H₅)Cl₃, Ti(OCOCH₃)Cl₃, and Ti(OCOC₆H₃)Cl₃ The magnesium compounds include magnesium halides such as MgCl₂, MgBr₂ and MgI₂. Anhydrous MgCl₂ is a preferred compound. 0.5 to 56, and preferably 1 to 10, moles of magnesium compounds are used per mole of titanium compound

The electron donor, the support, and the cocatalyst are the same as those described above. As noted, the modifier can be similar in chemical structure to the aluminum containing activators. The modifier has the formula BX₃ or AIR₍₃₋ₑ₎Xe wherein each R is independently alkyl having 1 to 14 carbon atoms; each X is independently chlorine, bromine, or iodine; and e is 1 or 2. One or more modifiers can be used. Preferred modifiers include alkylaluminum mono- and dichlorides wherein each alkyl radical has 1 to 6 carbon atoms; boron trichloride; and the trialkylaluminums 0.1 to 10 moles, and preferably 0.2 to 2.5 moles, of modifier can be used per mole of electron donor. The molar ratio of modifier to titanium can be in the range of 1:1 to 10:1 and is preferably in the range of 2:1 to 5:1.

The polymerization is, preferably, conducted in the gas phase using a continuous fluidized process. A typical fluidized bed reactor is described in United States patent 4,482,687.

A relatively low density copolymer is prepared for the first component and a relatively high density copolymer as the second component. The weight of the first copolymer to the second copolymer is in the range of 70:30 to 30:70.

The low density component:

The flow index as in the rage of 5 to 75 grams per 10 minutes, and is preferably in the range of 5 to 25 grams per 10 minutes. The molecular weight of this polymer is up to 190,000. The density of the copolymer is in the range, of 0.860 to 0.930 gram per cubic centimetre. The melt flow ratio of the polymer is in the range of 10 to 50, and is preferably 15 to 40. The Mw/Mn ratio is in the range of 2 to 4, and is preferably in the range of 2.5 to 3.5.

Melt index is determined under ASTM D-1238, Condition E. It is measured at 1.90 degrees C and 2.16 Kilograms and reported as grams per 10 minutes. Flow index is determined under ASTM D-1238 Condition F. It is measured at 190 degrees C and 10 times the weight used in determining the melt index, and reported as grams per 10 minutes. Melt flow ratio is the ratio of flow index to the melt index.

The high density component:

The flow index is in the range of 5 to 75 grams per 10 minutes, and is preferably in the range of 5 to 25 grams per 10 minutes. The molecular weight of the high density copolymer is up to 190,000. The density of the copolymer is in the range of 0.935 to 0.970 gram per cubic centimetre. The melt flow ratio of this copolymer is in the range of 10 to 50, and is preferably 15 to 40. The Mw/Mn ratio is in the range of 2 to 4, and is preferably in the range of 2.5 to 3.5.

The blend or final product has a flow index in the range of 5 to 50 grams per 10 minutes. The molecular weight of the final product is in the range of 98,000 to 190,000. The density of the blend is in the range of 0.900 to 0.940 gram per cubic centimetre, and is preferably in the range of 0.900 to 0.935 gram per cubic centimeter. The melt flow ratio of the blend is in the range of 10 to 50 and is preferably in the range 15 to 35.

The blend has a Mw/Mn ratio of a least 2. The blend preferably has an Mw/Mn ratio 3 to 6. Mw is the weight average molecular weight; Mn is the number average molecular weight; and the Mw/Mn ratio can be referred to as the polydispersity index, which is a measure of the breadth of the molecular weight distribution.

The low density component:

The mole ratio of alpha-olefin to ethylene can be in the range of 0.10:1 to 1.6:1, and is preferably in the range of 0.14:1 to 0.83:1. The mole ratio of hydrogen (if used) to ethylene can be in the range of 0.01:1 to 0.9:1, and is preferably in the range of 0.01:1 to 0.54:1. The operating temperature is generally in the range of 60 degrees C to 100 degrees C. Preferred operating temperatures vary depending on the density desired, i.e., lower temperatures vary depending on the density desired, i.e., lower temperatures for lower densities and higher temperatures for higher densities.

The high density component:

The mole ratio of alpha-olefin to ethylene can be in the range of 0.004:1 to 0.15:1, and is preferably in the range of 0.004:1 to 0.1:1. The mole ratio of hydrogen to ethylene can be in the range of 0.02:1 to 1:1, and is preferably in the range of 0.045:1 to 0.68:1. The operating temperature is generally in the range of 70 degrees C to 100 degrees C. As mentioned above, the temperature is preferably varied with the desired density.

The pressure is generally the same for preparing both components. The pressure can be in the range of 1.4 to 3.1 MPa (200 to 450 psig) and is preferably in the range of 1.9 to 2.4 MPa (280 to 350 psig).

A typical fluidized bed reactor can be described as follows:

The bed is usually made up of the same granular resin that is to be produced in the reactor. Thus, during the course of the polymerization, the bed comprises formed polymer particles, growing polymer particles, and catalyst particles fluidized by polymerization and modifying gaseous components introduced at a flow rate or velocity sufficient to cause the particles to separate and act as a fluid. The fluidizing gas is made up of the initial feed, make-up feed, and cycle (recycle) gas, i.e., comonomers and, if desired, modifiers and/or an inert carrier gas.

The essential parts of the reactor system are the vessel, the bed, the gas distribution plate, inlet and outlet piping, a compressor, cycle gas cooler, and a product discharge system. In the vessel, above the bed, there is a velocity reduction zone, and, in the bed, a reaction zone. Both are above the gas distribution plate.

Conventional additives, which can be introduced into the blend, are exemplified by antioxidants, ultraviolet absorbers, antistatic agents, pigments, dyes, nucleating agents, fillers, slip agents, fire retardants, plasticizers, processing aids, lubricants, stabilizers, smoke inhibitors, viscosity control agents, crosslinking agents, catalysts, and boosters, tackifiers, and anti-blocking agents. Aside from the fillers, the additives can be present in the blend in amounts of 0.1 to 10 parts by weight of additive for each 100 parts by weight of polymer blend. Fillers can be added in amounts of up to 200 parts by weight and more for each 100 parts by weight of the blend

Advantages of the film prepared from the blend of this invention are as follows: higher Elmendorf Tear Strength in the machine direction, higher puncture strength, improved MD/TD Elmendorf Tear balance at higher MD film orientation, and higher secant modulus.

All molecular weights in this specification are weight average molecular weights unless otherwise designated.

The weight average molecular weight of the second copolymer is from 90% to 110% of the molecular weight of the first copolymer, and more preferably the molecular weights differ by at most 2,000.

### Examples (not according to the invention)

Examples 1 to 5 are representative of a commercially available polyethylene copolymer prepared in a single gas phase reactor with similar molecular weight, molecular weight distribution and density to the blends according to this invention.

**Table I**

| **Example** | | 1 | 2 | 3 | 4 | 5 |
|---|---|---|---|---|---|---|
| **RESIN PROPERTIES** | | | | | | |
| DENSITY | | 0.9266 | 0.9266 | 0.9266 | 0.9266 | 0.9266 |
| MI | | 0.54 | 0.54 | 0.54 | 0.54 | 0.54 |
| FI | | 13.5 | 13.5 | 13.5 | 13.5 | 13.5 |
| MFR | | 25.0 | 25.0 | 25.0 | 25.0 | 25.0 |

| **GLOUCESTER INFO** | | | | | | |
|---|---|---|---|---|---|---|
| DIE GAP | | 60 | 60 | 60 | 120 | 120 |
| GAUGE/mm (MILS) | | 0.02 (0.85) | 0.02(0.85) | 0.02 (0.85) | 0.02 (0.85) | 0.02 (0.85) |
| BUR | | 2.8:1 | 3.4:1 | 4:1 | 2.8:1 | 3.4:1 |
| SCREW RPM | | 32 | 32 | 32 | 30 | 30 |
| Kg/Hr (LES/HR) | | 84.6 | 85.5 | 85.5 | 86.3 | 86.3 |
| | | (186.5) | (188.4) | (188.4) | (190.3) | (190.3) |
| Kg/Hr/RPM (LBS/HR/RPM) | | 2.6 | 2.7 | 2.7 | 2.9 | 2.9 |
| | | (5.8) | (5.9) | (5.9) | (6.3) | (6.3) |
| Kg/Hr/mm Die (LBS/HR/INCH DIE) | | 0.177 | 0.179 | 0.179 | 0.180 | 0.180 |
| | | (9.9) | (10) | (10) | (10.1) | (10.1) |
| DRIVE AMPS | | 165 | 128 | 131 | 160 | 160 |
| Melt Temp (Deg C) (Melt Temp (Deg F)) | | 243 | 244 | 244 | 243 | 243 |
| | | (470) | (472) | (472) | (470) | (469) |
| Head pressure (MPa) (Head Pressure (PsI)) | | 36.7 | 35.7 | 35.6 | 29.6 | 29.8 |
| | | (5320) | (5180) | (5160) | (4300) | (4320) |
| Frost Line Height (Cm) (Frost Line Height (Inches)) | | 50.8 | 49.5 | 49.5 | 50.8 | 50.8 |
| | | (20) | (19.5) | (19.5) | (20) | (20) |

| **FILM PROPERTIES** | | | | | | |
|---|---|---|---|---|---|---|
| Tensile Strength (MPa) (Tensile strength (PSI)) | MD | 48.0 | 56.4 | 50.5 | 47.8 | 60.0 |
| | | (7100) | (8180) | (7320) | (6940) | (8700) |
| | TD | 46.9 | 51.2 | 56.3 | 45.9 | 56.2 |
| | | (6800) | (7500) | (8160) | (6660) | (7500) |
| % Elongation | MD | 505 | 607 | 569 | 452 | 525 |
| | TD | 748 | 743.1 | 694 | 718 | 735 |
| Yield Strength (MPa) (Yield Strength PSI) | MD | 14.2 | 14.5 | 14.7 | 14.5 | 14.7 |
| | | (2060) | (2100) | (2130) | (2100) | (2130) |
| | TD | 14.3 | 15.0 | 15.5 | 15.0 | 15.0 |
| | | (2070) | (2180) | (2250) | (2180) | (2190) |
| Secant Modulus at 1% (MPa) (Secant Modulus at 1% (PSI)) | MD | 262.8 | 176.0 | 265.0 | 253.3 | 244.1 |
| | | (38120) | (25530) | (38440) | (36740) | (35400) |
| | TD | 294.6 | 292.5 | 273.7 | 285.2 | 284.4 |
| | | (42730) | (42420) | (39690) | (41340) | (41250) |
| Elmendorf Tear grams /mm (Elemendorf Tear Grams/MIL) | MD | 11968 | 13779 | 15039 | 17441 | 16654 |
| | | (304) | (350) | (382) | (443) | (423) |
| | TD | 25039 | 22402 | 18661 | 31811 | 28465 |
| | | (636) | (569) | (474) | (808) | (723) |
| MD/TD Ratio | | 0.48 | 0.61 | 0.81 | 0.55 | 0.58 |
| Tensile Impact Kg/cm³ (Tensile Impact Lbs/Cu In) | MD | 60.0 | 59.8 | 64.8 | 58.7 | 62.3 |
| | | (2170) | (2160) | (2340) | (2120) | (2250) |
| | TD | 47.9 | 51.5 | 54.8 | 49.5 | 52.6 |
| | | (1730) | (1860) | (1980) | (1790) | (1900) |
| Puncture Energy/mm (Puncture Energy/Mil) | | 894 | 827 | 870 | 1114 | 1024 |
| | | (22.7) | (21.0) | (22.1) | (28.3) | (26.0) |

Notes to above Table
1. The films are extruded in a 3.5 inch Gloucester™ blown tubular film extruder having a length to diameter ratio of 24:1; a linear low density polyethylene screw; a 6 inch die; and a die gap of 60 and 120 mils. The Elmendorf Tear Strength is determined for each film, both in the machine direction and the transverse direction, and the results recorded.
2. Density is measured by producing a plaque in accordance with ASTM D-1928, procedure C, and then testing as is via ASTM D-1505. It is reported in gram per cubic centimeter.
3. Melt flow ratio (MFR) is the ratio of flow index (FI) to melt index (MI), both defined above and are reported in grams per 10 minutes.
4. The molecular weight (MW) and molecular weight distribution (MWD) (polydispersity) (Mw/Mn ratio) are determined via Size Exclusion Chromatography (SEC) using a Waters™ 150C GPC instrument at 140 degrees C with 1,2,4- trichlorobenzene as solvent at a flow rate of I milliliter per minute. The pore size range of the column set provides for a molecular weight separation covering 200 to 10,000,000 Daltons. Notional Institute of Standards Technology polyethylene standard NBS1475 is used as the broad standard calibrant to obtain the molecular weight distribution.
5. Die rate (LBS/HR/INCH DIE) is defined as pounds per hour per inch of die circumference.
6. Frostline height (FLH) is that distance off of the base of the die during which the polymer undergoes a phase transformation from a viscous liquid to a solid.
7. Blow up ratio (BUR) is the ratio of the bubble diameter to the die diameter.
8. DIE GAP is that of the Gloucester™ extruder. It is reported in mils.
9. GAUGE (MILS) is the thickness of the extruded film.
10. SCREW RPM is the revolutions per minute of the extruder screw.
11. LBS/HR is the pounds per hour of film produced, i.e. the output rate.
12. LBS/HR/ RPM is the specific output rate .
13. DRIVE AMPS is the number of amps needed to drive the extruder.
14. MELT TEMP (DEG F) is the welt temperature of the blend.
15. HEAD PRESSURE (PSI) is the pressure measured at the head of the extruder.
16. FROST LINE HEIGHT (FLH) is given in inches.
17. TENSILE STRENGTH (PSI) is measured under ASTM D882.
18. MD machine direction
19. TD = transverse direction
20. % ELONGATION is measured under ASTM D882.
21. YIELD STRENGTH (PSI) is measured under ASTM D882.
22. SECANT MODULUS AT 1% (PSI) is measured under ASTM D882.
23. ELMENDORF TEAR (GRAMS/MIL) is measured under ASTM D1922.
24. TENSILE IMPACT (LBB/CU IN) is measured in pounds per cubic inch under ASTM D1822.
25. PUNCTURE (ENERGY/MIL) is measured by a Union Carbide method, WC-68L.

## Claims

1. A blend comprising a mixture of a first ethylene/alpha-olefin copolymer and a second ethylene/alpha-olefin copolymer said blend having a flow index in the range of 5 to 50 grams per 10 minutes; a melt flow ratio in the range of 10 to 50; a density in the range of 0.900 to 0.940 gram per cubic centimetre; a weight average molecular weight in the range of 98,000 to 190,000; and an Mw/Mn ratio of at least 2; wherein:
each copolymer is a copolymer of ethylene and an alpha-olefin having 3 to 8 carbon atoms;
the first copolymer has a flow index in the range of 5 to 75 grams per 10 minutes; a melt flow ratio in the range of 10 to 50; a density in the range of 0.860 to 0.930 gram per cubic centimetre; a weight average molecular weight up to 190,000; and an Mw/Mn ratio in the range of 2 to 4;
the second copolymer has a flow index in the range of 5 to 75 grams per 10 minutes; a melt flow ratio in the range of 10 to 50; a density in the range of 0.935 to 0.970 grams per cubic centimetre; a weight average molecular weight up to 190,000; and an Mw/Mn ratio in the range of 2 to 4;
the weight ratio of the first copolymer to the second copolymer is in the range of 70:30 to 30:70;
the weight average molecular weight of the second copolymer is from 90 to 110% of the molecular weight of the first copolymer.

2. The blend defined in claim 1 wherein the blend has a melt flow ratio in the range of 15 to 35; a density in the range of 0.900 to 0.935 grams per cubic centimetre; and an Mw/Mn ratio in the range of 3 to 6.

3. The blend defined in claim 1 or 2 wherein the first copolymer has a flow index in the range of 5 to 25 grams per 10 minutes; a weight average molecular weight of up to 190,000; a melt flow ratio in the range of 15 to40; a density in the range of 0.890 to 0.920 gram per cubic centimetre; and an Mw/Mn ratio in the range 2.5 to 3.5, and the second copolymer has a flow index in the range of 5 to 25 grams per 10 minutes; a weight average molecular weight of up to 190,000; a melt flow ratio in the range of 15 to 40; a density in the range of 0.935 to 0.960 gram per cubic centimetre; and a Mw/Mn ratio in the range of 2.5 to 3.5.

4. The blend defined in any one of the preceding claims wherein the alpha-olefin is 1-hexene.

5. The blend defined in claim 1 wherein the first copolymer is obtainable by reacting, in a first reactor, the alpha-olefin and ethylene in a mole ratio of alpha-olefin to ethylene in the range of 0.1:1 to 1.6:1 and a mole ratio of hydrogen, which is optional, to ethylene in the range of 0.01:1 to 0.9:1, and the second copolymer is obtainable by reacting, in a second reactor, the alpha-olefin and ethylene in a mole ratio of alpha-olefin to ethylene in the range of 0.004:1 to 0.15:1 and a mole ratio of hydrogen to ethylene in the range of 0.02:1 to 1:1.

6. A film extruded from the blend defined in any one of claims 1 to 5 having an Elmendorf Tear Strength in the machine direction of at least 19685 grams per millimetre (500 grams per mil).

7. A process for preparing a blend as defined in any one of claims 1 to 5 which comprises mixing the first and second copolymers.

8. A process as defined in claim 7, wherein the first copolymer and the second copolymer are prepared using a Ziegler Natta catalyst.

## Patentansprüche

1. Mischung, die ein Gemisch aus einem ersten Ethylen/α-Olefin-Copolymer und einem zweiten Ethylen/α-Olefin-Copolymer umfasst, wobei die Mischung einen Fließindex im Bereich von 5 bis 50 Gramm pro 10 Minuten hat; ein Schmelzflussverhältnis im Bereich von 10 bis 50; eine Dichte im Bereich von 0,900 bis 0,940 g/cm³; ein gewichtsgemitteltes Molekulargewicht im Bereich von 98.000 bis 190.000; und ein Verhältnis Mw/Mn von mindestens 2; wobei:
jedes Copolymer ein Copolymer von Ethylen und einem α-Olefin mit 3 bis 8 Kohlenstoffatomen ist;
das erste Copolymer einen Fließindex im Bereich von 5 bis 75 Gramm pro 10 Minuten hat; ein Schmelzflussverhältnis im Bereich von 10 bis 50; eine Dichte im Bereich von 0,860 bis 0,930 g/cm³; ein gewichtsgemitteltes Molekulargewicht von bis zu 190.000; und ein Verhältnis Mw/Mn im Bereich von 2 bis 4;
das zweite Copolymer einen Fließindex im Bereich von 5 bis 75 Gramm pro 10 Minuten hat; ein Schmelzflussverhältnis im Bereich von 10 bis 50; eine Dichte im Bereich von 0,935 bis 0,970 g/cm³; ein gewichtsgemitteltes Molekulargewicht von bis zu 190.000; und ein Verhältnis Mw/Mn im Bereich von 2 bis 4;
das Gewichtsverhältnis des ersten Copolymers zu dem zweiten Copolymer im Bereich von 70:30 bis 30:70 liegt;
das gewichtsgemittelte Molekulargewicht des zweiten Copolymers von 90 bis 110% des Molekulargewichts des ersten Copolymers beträgt.

2. Mischung nach Anspruch 1, wobei die Mischung ein Schmelzflussverhältnis im Bereich von 15 bis 35 hat; eine Dichte im Bereich von 0,900 bis 0,935 g/cm³; und ein Verhältnis Mw/Mn im Bereich von 3 bis 6.

3. Mischung nach Anspruch 1 oder 2, wobei das erste Copolymer einen Fließindex im Bereich von 5 bis 25 Gramm pro 10 Minuten hat; ein gewichtsgemitteltes Molekulargewicht von bis zu 190.000; ein Schmelzflussverhältnis im Bereich von 15 bis 40; eine Dichte im Bereich von 0,890 bis 0,920 g/cm³; und ein Verhältnis Mw/Mn im Bereich von 2,5 bis 3,5; und das zweite Copolymer einen Fließindex im Bereich von 5 bis 25 Gramm pro 10 Minuten hat; ein gewichtsgemitteltes Molekulargewicht von bis zu 190.000; ein Schmelzflussverhältnis im Bereich von 15 bis 40; eine Dichte im Bereich von 0,935 bis 0,960 g/cm³; und ein Verhältnis Mw/Mn im Bereich von 2,5 bis 3,5.

4. Mischung nach einem der vorhergehenden Ansprüche, wobei das α-Olefin 1-Hexen ist.

5. Mischung nach Anspruch 1, wobei das erste Copolymer erhalten werden kann durch Umsetzen, in einem ersten Reaktor, von α-Olefin und Ethylen in einem Molverhältnis von α-Olefin zu Ethylen im Bereich von 0,1:1 bis 1,6:1 und einem Molverhältnis von Wasserstoff, der optional ist, zu Ethylen im Bereich von 0,01:1 bis 0,9:1, und das zweite Copolymer erhalten werden kann durch Umsetzen, in einem zweiten Reaktor, von α-Olefin und Ethylen in einem Molverhältnis von α-Olefin zu Ethylen im Bereich von 0,004:1 bis 0,15:1 und einem Molverhältnis von Wasserstoff zu Ethylen im Bereich von 0,02:1 bis 1:1.

6. Aus der Mischung nach einem der Ansprüche 1 bis 5 extrudierte Folie mit einer Elmendorf-Reißfestigkeit in Maschinenrichtung von mindestens 19685 g/mm (500 g/mil).

7. Verfahren zur Herstellung einer Mischung nach einem der Ansprüche 1 bis 5, bei dem das erste und das zweite Copolymer gemischt werden.

8. Verfahren nach Anspruch 7, bei dem das erste Copolymer und das zweite Copolymer unter Verwendung eines Ziegler-Natta-Katalysators hergestellt werden.

## Revendications

1. Alliage comprenant un mélange d'un premier copolymère d'éthylène et d'alpha-oléfine et d'un deuxième copolymère d'éthylène et d'alpha-oléfine, lequel alliage présente un indice d'écoulement de 5 à 50 grammes par 10 minutes, un rapport d'indices d'écoulement à l'état fondu de 10 à 50, une masse volumique de 0,900 à 0,940 gramme par centimètre-cube, une masse molaire moyenne en poids de 98 000 à 190 000, et un rapport Mp/Mn d'au moins 2, et dans lequel :
- chaque copolymère est un copolymère d'éthylène et d'une alpha-oléfine de 3 à 8 atomes de carbone ;
- le premier copolymère présente un indice d'écoulement de 5 à 75 grammes par 10 minutes, un rapport d'indices d'écoulement à l'état fondu de 10 à 50, une masse volumique de 0,860 à 0,930 gramme par centimètre-cube, une masse molaire moyenne en poids d'au plus 190 000, et un rapport Mp/Mn de 2 à 4 ;
- le deuxième copolymère présente un indice d'écoulement de 5 à 75 grammes par 10 minutes, un rapport d'indices d'écoulement à l'état fondu de 10 à 50, une masse volumique de 0,935 à 0,970 gramme par centimètre-cube, une masse molaire moyenne en poids d'au plus 190 000, et un rapport Mp/Mn de 2 à 4 ;
- le rapport pondéral du premier copolymère au deuxième copolymère vaut de 70/30 à 30/70 ;
- et la masse molaire moyenne en poids du deuxième copolymère vaut de 90 à 110 % de celle du premier copolymère.

2. Alliage conforme à la revendication 1, lequel alliage présente un rapport d'indices d'écoulement à l'état fondu de 15 à 35, une masse volumique de 0,900 à 0,935 gramme par centimètre-cube, et un rapport Mp/Mn de 3 à 6.

3. Alliage conforme à la revendication 1 ou 2, dans lequel :
- le premier copolymère présente un indice d'écoulement de 5 à 25 grammes par 10 minutes, une masse molaire moyenne en poids d'au plus 190 000, un rapport d'indices d'écoulement à l'état fondu de 15 à 40, une masse volumique de 0,890 à 0,920 gramme par centimètre-cube, et un rapport Mp/Mn de 2,5 à 3,5 ;
- et le deuxième copolymère présente un indice d'écoulement de 5 à 25 grammes par 10 minutes, une masse molaire moyenne en poids d'au plus 190 000, un rapport d'indices d'écoulement à l'état fondu de 15 à 40, une masse volumique de 0,935 à 0,960 gramme par centimètre-cube, et un rapport Mp/Mn de 2,5 à 3,5.

4. Alliage conforme à l'une des revendications précédentes, dans lequel l'alpha-oléfine est de l'hex-1-ène.

5. Alliage conforme à la revendication 1, pour lequel on peut préparer le premier copolymère en faisant réagir, dans un premier réacteur, de l'alpha-oléfine et de l'éthylène en un rapport molaire de l'alpha-oléfine à l'éthylène de 0,1/1 à 1,6/1, avec, en option, de l'hydrogène en un rapport molaire à l'éthylène de 0,01/1 à 0,9/1, et l'on peut préparer le deuxième copolymère en faisant réagir, dans un deuxième réacteur, de l'alpha-oléfine et de l'éthylène en un rapport molaire de l'alpha-oléfine à l'éthylène de 0,004/1 à 0,15/1, avec de l'hydrogène en un rapport molaire à l'éthylène de 0,02/1 à 1/1.

6. Film extrudé, en un alliage conforme à l'une des revendications 1 à 5, qui présente une résistance à la déchirure dans le sens machine (Elmendorf) d'au moins 19 685 grammes par millimètre (500 grammes par millième de pouce).

7. Procédé de préparation d'un alliage conforme à l'une des revendications 1 à 5, qui comporte le fait de mélanger le premier copolymère et le deuxième copolymère.

8. Procédé conforme à la revendication 7, pour lequel le premier copolymère et le deuxième copolymère ont été préparés à l'aide d'un catalyseur de Ziegler-Natta.
